# EUROPEAN PATENT SPECIFICATION

(11) **EP 4 336 686 B1**
(45) Date of publication and mention of the grant of the patent: **01.07.2026**
(21) Application number: 21939849.2
(22) Date of filing: 07.05.2021
(51) Int. Cl.: H02B 13/035

(54) **GAS-INSULATED SWITCHGEAR**
GASISOLIERTE SCHALTANLAGE
APPAREILLAGE DE COMMUTATION À ISOLATION GAZEUSE

(43) Date of publication of application: 13.03.2024
(73) Proprietor: MITSUBISHI ELECTRIC CORPORATION, Chiyoda-ku Tokyo 100-8310 (JP)
(72) Inventor: KOSHITOGE, Takuya, Tokyo 100-8310 (JP); NAKAUCHI, Shinichiro, Tokyo 100-8310 (JP)
(74) Representative: Witte, Weller & Partner Patentanwälte mbB
(86) International application number: PCT/JP2021/017512
(87) International publication number: WO 2022/234657

(56) References cited:
- DE-A1- 2 822 773
- FR-A1- 2 221 837
- JP-A- 2007 097 332
- JP-A- 2015 220 795
- JP-U- H0 588 119
- JP-U- S6 138 807
- KR-Y1- 200 448 391

## Description

### Field

The present disclosure relates to a gas-insulated switchgear including a tank in which insulating gas is enclosed.

### Background

The gas-insulated switchgear is configured by connecting a plurality of units in which devices such as a breaker and a disconnector are installed. In the gas-insulated switchgear, devices constituting a unit are connected to each other and the units are connected to each other by a conductor such as aluminum or copper, and the conductor is accommodated in a tank in which insulating gas is enclosed, so that insulation performance is maintained. A connecting member in which the conductor is accommodated in the tank and insulating gas is enclosed is hereinafter referred to as a "connection tank".

Japanese Patent Application Laid-open No. 2017-189050 discloses a gas-insulated switchgear in which a sealed connector part is provided at an end portion of a tank of each unit, and a connection handle member is bridged across the sealed connector parts to connect the units. In the gas-insulated switchgear disclosed in Japanese Patent Application Laid-open No. 2017-189050, since the units are connected by the connection handle member, the units can be connected and separated without opening the tank of the unit to atmosphere.

Document DE 28 22 773 A1 shows a connector for encapsulated medium-voltage systems, wherein a vacuum fuse is integrated into the connector.

Document KR 2004 48391 Y1 shows a cable connector for a GIS having a voltage detecting portion and more specifically to a cable connector for a GIS cable connector having a voltage detecting portion.

Document FR 2 221 837 A1 shows a high-voltage connection device, intended in particular for use as a high-voltage feedthrough, comprising a hollow cylindrical insulating body. An insulated cable can be introduced at one end of this body through a sealing joint that fits against the cable insulation, while at the other end a connecting conductor extends, which is connected to a terminal device making contact with the exposed end of the cable.

### Summary of Invention

### Problem to be solved by the Invention

The gas-insulated switchgear disclosed in Japanese Patent Application Laid-open No. 2017-189050 is provided with the sealed connector part inside the tank, so that it is necessary to increase a size of the tank as compared with a structure in which units are connected to each other by the connection tank. In addition, measures for preventing the connection handle member from falling off are not taken, and reliability of electrical connection between the units is not ensured. Similarly, also in a case where the structure disclosed in Japanese Patent Application Laid-open No. 2017-189050 is applied to connection between devices, it is necessary to increase the size of the tank as compared with a structure using the connection tank, and reliability of electrical connection between the devices is not ensured.

The present disclosure has been made in view of the above, and an object of the present disclosure is to provide a gas-insulated switchgear capable of reliably electrically connecting devices or units to each other and capable of downsizing.

### Means to Solve the Problem

To solve the above-described problem and achieve the object, a gas-insulated switchgear according to claim 1 is defined.

### Effects of the Invention

According to the present disclosure, there is an effect of being able to obtain a gas-insulated switchgear capable of reliably electrically connecting devices or units to each other and capable of downsizing.

### Brief Description of Drawings

FIG. 1 is a front view of a gas-insulated switchgear according to a first embodiment.
FIG. 2 is a side view of a unit constituting the gas-insulated switchgear according to the first embodiment.
FIG. 3 is a cross-sectional view of an end portion of the unit of the gas-insulated switchgear according to the first embodiment.
FIG. 4 is a cross-sectional view of a cap of the gas-insulated switchgear according to the first embodiment.
FIG. 5 is a front view of the cap of the gas-insulated switchgear according to the first embodiment.
FIG. 6 is a cross-sectional view of a plug of the gas-insulated switchgear according to the first embodiment.
FIG. 7 is a front view of the plug of the gas-insulated switchgear according to the first embodiment.
FIG. 8 is a schematic view of a unit constituting a gas-insulated switchgear according to a second embodiment.

### Description of Embodiments

Hereinafter, a gas-insulated switchgear according to embodiments will be described in detail with reference to the drawings.

### First Embodiment.

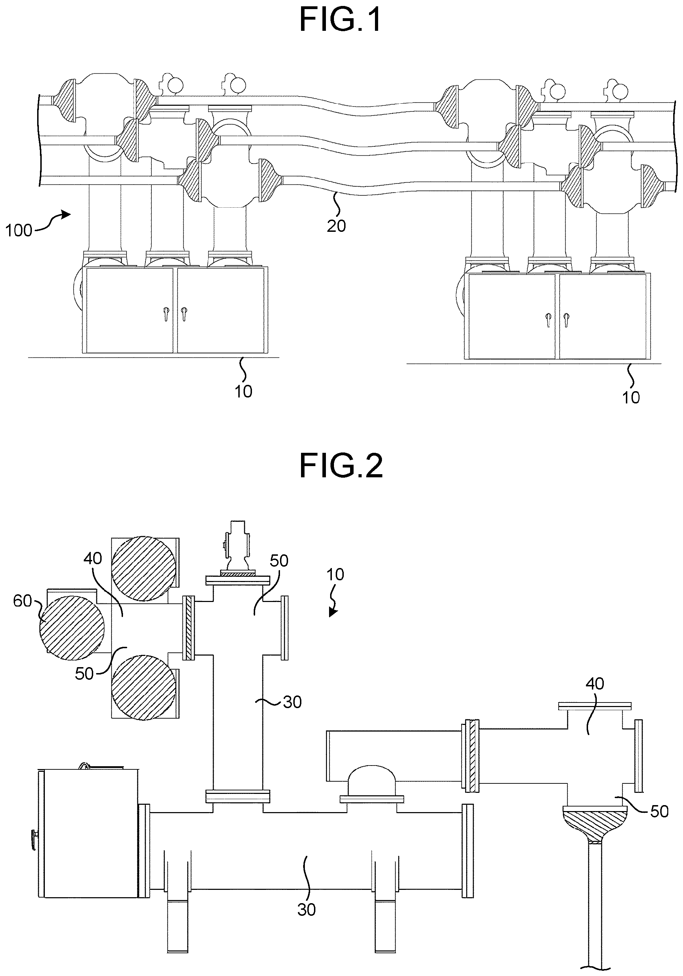

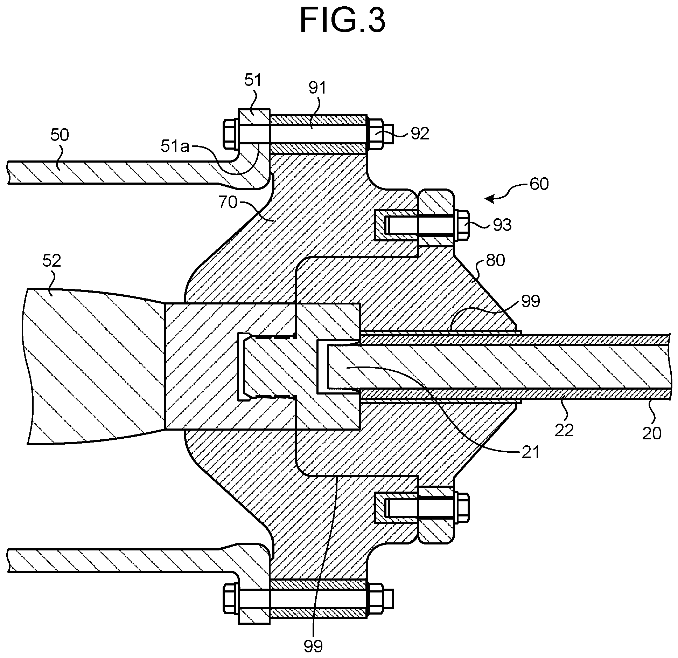

FIG. 1 is a front view of a gas-insulated switchgear according to a first embodiment. FIG. 2 is a side view of a unit constituting the gas-insulated switchgear according to the first embodiment. A gas-insulated switchgear 100 according to the first embodiment is configured by connecting a plurality of units 10 with a power cable 20. Each unit 10 is configured by connecting a plurality of devices such as a breaker 30 and a disconnector 40. Each device includes a tank 50 filled with insulating gas. At an end portion of the unit 10 to be connected to another unit 10, a connection structure 60 is installed at an end portion of the tank 50. FIG. 3 is a cross-sectional view of an end portion of the unit of the gas-insulated switchgear according to the first embodiment. The connection structure 60 is configured by stacking a cap 70 and a plug 80. The cap 70 is fixed to a flange 51 provided at an end portion of the tank 50 with a bolt 91 and a nut 92. The plug 80 is fixed to the cap 70 with a bolt 93.

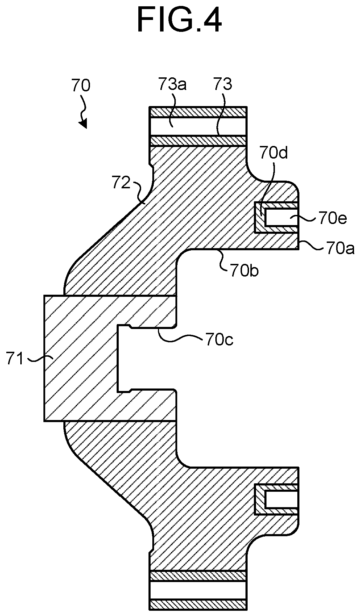

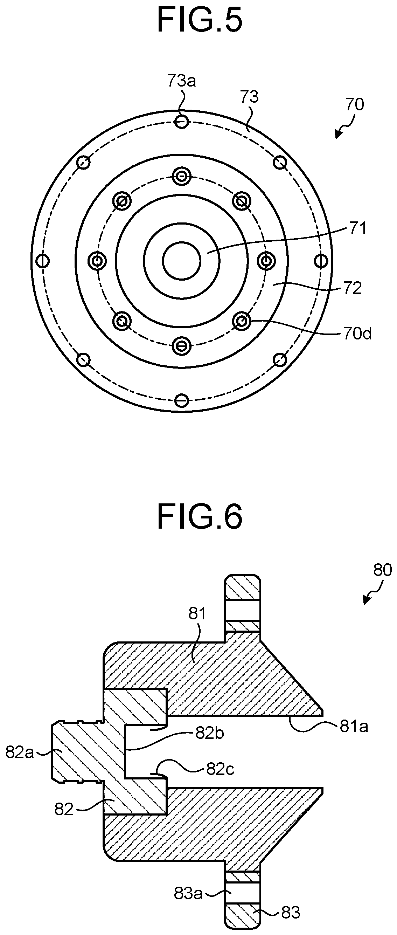

FIG. 4 is a cross-sectional view of a cap of the gas-insulated switchgear according to the first embodiment. FIG. 5 is a front view of the cap of the gas-insulated switchgear according to the first embodiment. The cap 70 has a disk shape, and includes a cap conductor 71 provided at a center portion, a cap solid insulator 72 surrounding the cap conductor 71 from an outer peripheral side, and an adapter 73 provided at an outer peripheral portion of the cap solid insulator 72. The cap solid insulator 72 is formed of an insulator. The adapter 73 is formed of metal. In the cap 70, a recess 70b is formed on an outer surface 70a contacted to the plug 80. Further, in the cap conductor 71, a cap hole 70c is formed on the outer surface 70a. The cap 70 includes an embedded metal 70d installed between the recess 70b and the adapter 73. A plurality of embedded metals 70d are embedded in the outer surface 70a of the cap solid insulator 72. In the adapter 73, a through hole 73a extending in an axial direction of a center axis of the cap 70 is formed. In the embedded metal 70d, a screw hole 70e extending in the axial direction of the center axis of the cap 70 is formed. The cap 70 is fixed to the tank 50 by the nut 92 and the bolt 91 passing through the through hole 73a of the adapter 73 and a through hole 51a of the flange 51 of the tank 50.

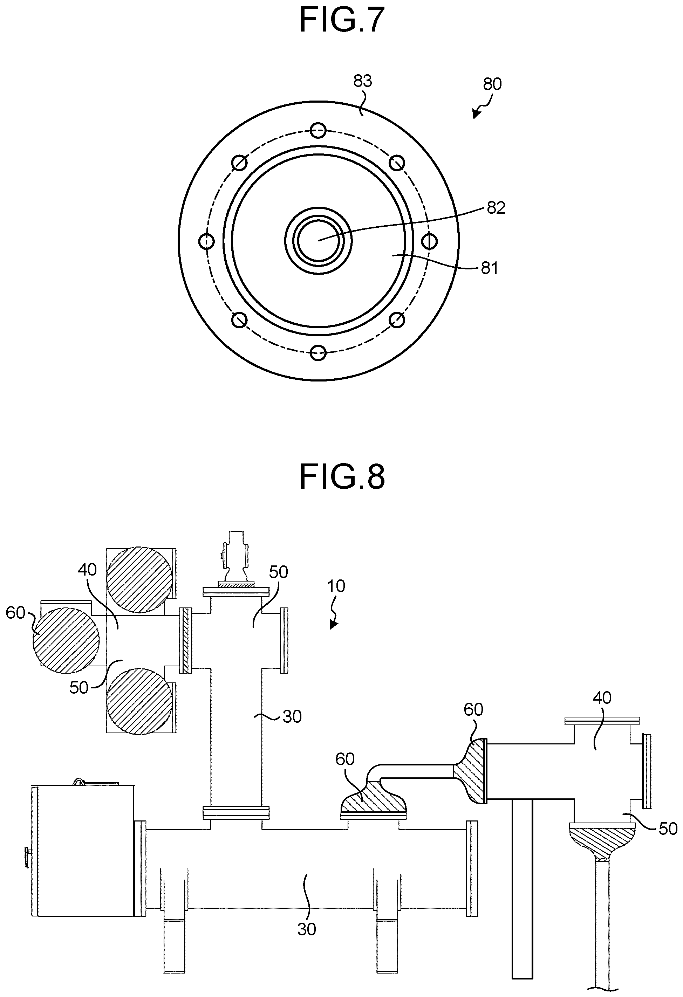

FIG. 6 is a cross-sectional view of a plug of the gas-insulated switchgear according to the first embodiment. FIG. 7 is a front view of the plug of the gas-insulated switchgear according to the first embodiment. The plug 80 includes: a cylindrical plug solid insulator 81; a plug conductor 82 that closes an inner end portion of the plug solid insulator 81 on a side contacted to the cap 70; and an adapter 83 installed on an outer peripheral portion of the plug solid insulator 81. The plug solid insulator 81 is formed of an insulator material. The adapter 83 is formed of metal. In the plug conductor 82, a protrusion 82a protruding toward an inner end portion side is formed. Further, in the plug conductor 82, a plug hole 82b communicating with a cylinder-inside 81a in the plug solid insulator 81 is formed. The plug hole 82b is provided with a contact 82c projecting in a center axis direction of the plug solid insulator 81. In the adapter 83, a through hole 83a extending in an axial direction of a center axis of the plug 80 is formed. The plug 80 is fastened to the embedded metal 70d of the cap 70 with the bolt 93 passing through the through hole 83a of the adapter 83.

Into the plug 80, the power cable 20 passing through the plug solid insulator 81 is inserted. A core wire 21 of the power cable 20 is inserted into the plug hole 82b of the plug conductor 82, and the contact 82c is contacted to the core wire 21. Therefore, the core wire 21 of the power cable 20 is electrically connected to the plug conductor 82 of the plug 80. A gap between insulating coating 22 of the power cable 20 and the plug solid insulator 81 is sealed with silicone rubber 99. By inserting the core wire 21 of the power cable 20 in which a layer of the silicone rubber 99 is formed on the insulating coating 22 into the plug hole 82b of the plug conductor 82, and molding the plug solid insulator 81 in a state where the plug conductor 82 and the power cable 20 are disposed in a mold for molding the plug solid insulator 81, the gap between the power cable 20 and the plug solid insulator 81 can be reduced.

A gap between the cap solid insulator 72 and the plug solid insulator 81 is sealed with the silicone rubber 99. The cap 70 and the plug 80 are fixed in a state where the plug 80 is inserted into the recess 70b of the cap 70. Therefore, a contact area is increased as compared with a structure in which planes abut each other, and an effect of suppressing a displacement between the cap 70 and the plug 80 due to allowance in the gap can be enhanced. In addition, as compared with the structure in which the planes abut each other, insulation effect can be enhanced because an insulation distance from outer peripheral surfaces of the cap solid insulator 72 and the plug solid insulator 81 to the cap conductor 71 and the plug conductor 82 is lengthened.

In separating the units 10 from each other, when the power cable 20 is removed, the bolt 93 fastening the plug 80 to the embedded metal 70d of the cap 70 is removed, and the plug 80 inserted into the recess 70b of the cap 70 is pulled out. Since the cap 70 remains fixed to the tank 50 even after the plug 80 is pulled out from the recess 70b, the insulating gas in the tank 50 is prevented from leaking to atmosphere when the units 10 are separated from each other.

The connection structure 60 having a structure for connecting a cable to the cap conductor 71 leading to a center conductor 52 installed in the tank 50 does not occupy a space in the tank 50 because the connection structure 60 is installed outside the tank 50. Therefore, the gas-insulated switchgear 100 according to the first embodiment can be downsized as compared with the gas-insulated switchgear in which the sealed connector part is provided in the tank.

In the gas-insulated switchgear 100 according to the first embodiment, the units 10 are connected to each other by the flexible power cable 20. In the structure in which the units are connected to each other by the conductor accommodated in the tank, unless positioning between the units is strictly performed, the tank may no longer be fixed between the units in some cases. However, in the gas-insulated switchgear 100 according to the first embodiment, since the units 10 are connected to each other by the flexible power cable 20, the units 10 can be connected to each other without strict positioning between the units 10. In addition, since the units 10 can be connected to each other without alignment of directions of the center conductors 52 of the units 10, a degree of freedom of layout of the units 10 is high.

Note that, in the gas-insulated switchgear 100 configured by connecting three or more units 10, by providing the connection structure 60 outside the tank 50 on both sides sandwiching a connection point between two units 10 among all the units 10, the units 10 can be reliably electrically connected to each other, and the gas-insulated switchgear 100 can be downsized.

### Second Embodiment.

FIG. 8 is a schematic view of a unit constituting a gas-insulated switchgear according to a second embodiment. In the gas-insulated switchgear 100 according to the second embodiment, the connection structure 60 is also provided at an end portion to be connected to another device among end portions of devices constituting the unit 10. Similarly to the first embodiment, the connection structure 60 has a structure in which the cap 70 and the plug 80 are stacked. Since shapes of the cap 70 and the plug 80 are similar to those of the first embodiment, the description thereof is omitted.

In the gas-insulated switchgear 100 according to the second embodiment, since devices constituting the unit 10 are connected to each other using the connection structure 60, the devices can be connected to each other without strict positioning between the devices. In addition, since the devices can be connected without alignment of the directions of the center conductors 52 of the devices to be connected, a degree of freedom of a layout of the devices in the unit 10 is high.

Note that only the devices constituting the unit 10 may be connected using the connection structure 60, and the units 10 may be connected using the connection tank.

Note that, in the gas-insulated switchgear 100 in which the unit 10 is configured by connecting three or more devices, by providing the connection structure 60 outside the tank 50 on both sides sandwiching a connection point between two devices among all the devices, the devices can be reliably electrically connected to each other, and the gas-insulated switchgear 100 can be downsized.

The description has been given, in the first embodiment, to the structure in which the connection structure 60 is provided outside the tank 50 on both sides sandwiching a connection point between the units 10, and the description has been given, in the second embodiment, to the structure in which the connection structure 60 is provided outside the tank 50 on both sides sandwiching a connection point between the devices. However, the connection structure 60 may be provided outside the tank 50 on both sides sandwiching the connection point between the units 10 and outside the tank 50 on both sides including the connection point between the devices. That is, in at least one of the connection points between the units 10 and the connection point between the devices, by providing the connection structure 60 connected with the power cable 20 for connection with another unit 10 or another device, outside the tank 50 on both sides sandwiching the connection point between the units 10 or the connection point between the devices, the devices or the units 10 can be reliably electrically connected to each other, and the gas-insulated switchgear 100 can be downsized.

The configurations illustrated in the above embodiments illustrate one example of the contents and can be combined with another known technique, and it is also possible to omit and change a part of the configuration without departing from the subject matter, the scope of which is defined in the appended claims.

### Reference Signs List

10 unit; 20 power cable; 21 core wire; 22 insulating coating; 30 breaker; 40 disconnector; 50 tank; 51 flange; 51a, 73a, 83a through hole; 52 center conductor; 60 connection structure; 70 cap; 70a outer surface; 70b recess; 70c cap hole; 70d embedded metal; 70e screw hole; 71 cap conductor; 72 cap solid insulator; 73, 83 adapter; 80 plug; 81 plug solid insulator; 81a cylinder-inside; 82 plug conductor; 82a protrusion; 82b plug hole; 82c contact; 91, 93 bolt; 92 nut; 99 silicone rubber; 100 gas-insulated switchgear.

## Claims

1. A gas-insulated switchgear (100) configured by connecting a plurality of units (10) each including a plurality of devices (30, 40) accommodated in a tank (50) in which insulating gas is enclosed, wherein:
in at least one connection point between two of the units (10) and/or between two of the devices (30, 40), a connection structure (60) connected with a flexible power cable (20) for connection with another unit (10) or another device (30, 40) is installed outside the tank (50),
the connection structure (60) includes:
a cap (70) configured to close an opening of the tank (50), the cap (70) having a disk shape; and
a plug (80) fixed to an outer surface of the cap (70), the outer surface facing in a direction opposite to the tank (50),
the cap (70) includes:
a cap conductor (71) connected to a center conductor (52) in the tank (50); and
a cap solid insulator (72) surrounding an outer peripheral side of the cap conductor (71),
the plug (80) includes:
a plug solid insulator (81) having a cylindrical shape;
a plug conductor (82) configured to close an end portion of the plug solid insulator (81) on a side contacted to the cap (70), the plug conductor (82) being in contact with the cap conductor (71); and
an adapter (83) installed on an outer peripheral portion of the plug solid insulator (81),
in the plug conductor (82), a plug hole (82b) communicating with a cylinder-inside (81a) in the plug solid insulator (81) is formed,
in the adapter (83), a through hole (83a) extending in an axial direction of a center axis of the plug (80) is formed,
into the plug (80), a power cable (20) passing through the plug solid insulator (81) is inserted, and
a core wire (21) of the power cable (20) is inserted into the plug hole (82b),
the tank (50) includes a flange (51) on an end portion,
the cap (70) is fixed to the flange (51) with a first bolt (91) and a nut (92), and
the plug (80) is fixed to the cap (70) with a second bolt (93) screwed from outside the tank (50) via the through hole (83a) to a non-through screw hole, having an embedded metal (70d), formed on the outer surface.

2. The gas-insulated switchgear (100) according to claim 1, wherein
a recess (70b) is formed on the outer surface of the cap (70), and
the plug (80) is inserted into the recess (70b).

3. The gas-insulated switchgear (100) according to claim 1, wherein
a gap between the cap solid insulator (72) and the plug solid insulator (81) is sealed with a silicone rubber (99).

4. The gas-insulated switchgear (100) according to claim 1, wherein
in the cap (70), a cap hole (70c) is formed on an outer surface (70a) contacted to the plug (80), and
a protrusion (82a) fitted to the cap hole (70c) is formed on an inner surface of the plug conductor (82).

5. The gas-insulated switchgear (100) according to claim 1, wherein
the plug hole (82b) is provided with a contact (82c) projecting in a center axis direction of the plug solid insulator (81), and
the contact (82c) is contacted to the core wire (21).

## Patentansprüche

1. Gasisoliertes Schaltgerät (100), das durch die Verbindung mehrerer Einheiten (10) konfiguriert ist, von denen jede mehrere Einrichtungen (30, 40), die in einem Tank (50), in dem Isoliergas eingeschlossen ist, aufgenommen sind, aufweist, wobei
in mindestens einem Verbindungspunkt zwischen den zwei Einheiten (10) und/oder zwischen den zwei Einrichtungen (30, 40) eine Verbindungsstruktur (60), die mit einem flexiblen Stromkabel (20) zur Verbindung mit einer anderen Einheit (10) oder einer anderen Einrichtung (30, 40) verbunden ist, außerhalb des Tanks (50) installiert ist,
wobei die Verbindungsstruktur (60) Folgendes aufweist:
eine Kappe (70), die dazu eingerichtet ist, eine Öffnung des Tanks (50) zu verschließen, wobei die Kappe (70) eine Scheibenform aufweist; und
einen Stecker (80), der auf einer Außenfläche der Kappe (70) befestigt ist, wobei die Außenfläche in eine zu dem Tank (50) entgegengesetzte Richtung zeigt,
die Kappe (70) aufweist:
einen Kappenleiter (71), der mit einem Mittelleiter (52) in dem Tank (50) verbunden ist; und
einen festen Kappenisolator (72), der eine äußere Umfangsseite des Kappenleiters (71) umgibt,
der Stecker (80) aufweist:
einen festen Steckerisolator (81), der eine zylindrische Form aufweist;
einen Steckerleiter (82), der dazu ausgelegt ist, einen Endabschnitt des festen Steckerisolators (81) auf einer Seite, die mit der Kappe (70) in Kontakt steht, zu schließen, wobei der Steckerleiter (82) mit dem Kappenleiter (71) in Kontakt steht; und
einen Adapter (83), der an einem Außenumfangsabschnitt des festen Steckerisolators (81) installiert ist,
in dem Steckerleiter (82) ein Steckerloch (82b) ausgebildet ist, das mit einem Zylinderinneren (81a) in dem festen Steckerisolator (81)kommuniziert,
in dem Adapter (83) ein Durchgangsloch (83a) ausgebildet ist, das sich in einer axialen Richtung einer Mittelachse des Steckers (80) erstreckt,
in den Stecker (80) ein durch den festen Steckerisolator (81) geführtes Stromkabel (20) eingeführt ist, und
ein Kernleiter (21) des Stromkabels (20) in das Steckerloch (82b) eingeführt ist,
der Tank (50) einen Flansch (51) an einem Endabschnitt aufweist,
die Kappe (70) mit einer ersten Schraube (91) und einer Mutter (92) an dem Flansch (51) befestigt ist, und
der Stecker (80) an der Kappe (70) befestigt ist mit einer zweiten Schraube (93), die von außen an dem Tank (50) durch das Durchgangsloch (83a) in ein nicht durchgehendes Schraubenloch mit eingegossenem Metall (70d) eingeschraubt wird, ausgebildet auf der Außenfläche.

2. Gasisoliertes Schaltgerät (100) nach Anspruch 1, wobei
eine Vertiefung (70b) auf der Außenfläche der Kappe (70) gebildet ist, und
der Stecker (80) in die Vertiefung (70b) eingeführt ist.

3. Gasisoliertes Schaltgerät (100) nach Anspruch 1, wobei
ein Spalt zwischen dem festen Kappenisolator (72) und dem festen Steckerisolator (81) mit einem Silikonkautschuk (99) abgedichtet ist.

4. Gasisoliertes Schaltgerät (100) nach Anspruch 1, wobei
in der Kappe (70) ein Kappenloch (70c) auf einer Außenfläche (70a), die mit dem Stecker (80) in Kontakt steht, ausgebildet ist, und
ein Vorsprung (82a), der in das Kappenloch (70c) gepasst ist, auf einer Innenfläche des Steckerleiters (82) ausgebildet ist.

5. Gasisoliertes Schaltgerät (100) nach Anspruch 1, wobei
das Steckerloch (82b) mit einem Kontakt (82c) versehen ist, der in Richtung der Mittelachse des festen Steckerisolators (81) vorspringt, und
der Kontakt (82c) mit dem Kernleiter (21) in Kontakt steht.

## Revendications

1. Appareillage de commutation à isolation au gaz (100) conçu en raccordant une pluralité d'unités (10) comportant chacune une pluralité de dispositifs (30, 40) logés dans un réservoir (50) dans lequel un gaz isolant est enfermé, dans lequel :
dans au moins un point de raccordement entre deux des unités (10) et/ou entre deux des dispositifs (30, 40), une structure de raccordement (60) raccordée à un câble de puissance (20) flexible pour un raccordement avec une autre unité (10) ou un autre dispositif (30, 40) est installée à l'extérieur du réservoir (50),
la structure de raccordement (60) comporte :
un bouchon (70) conçu pour fermer une ouverture du réservoir (50), le bouchon (70) ayant la forme d'un disque ; et
un obturateur (80) fixé à une surface extérieure du bouchon (70), la surface extérieure étant orientée dans une direction opposée au réservoir (50),
le bouchon (70) comporte :
un conducteur de bouchon (71) raccordé à un conducteur central (52) dans le réservoir (50) ; et
un isolateur de bouchon solide (72) entourant un côté périphérique extérieur du conducteur de bouchon (71),
l'obturateur (80) comporte :
un isolateur d'obturateur solide (81) ayant une forme cylindrique ;
un conducteur d'obturateur (82) conçu pour fermer une partie d'extrémité de l'isolateur d'obturateur solide (81) sur un côté en contact avec le bouchon (70), le conducteur d'obturateur (82) étant en contact avec le conducteur de bouchon (71) ; et
un adaptateur (83) installé sur une partie périphérique extérieure de l'isolateur d'obturateur solide (81),
dans le conducteur d'obturateur (82), un trou d'obturateur (82b) communiquant avec un cylindre à l'intérieur (81a) dans l'isolateur d'obturateur solide (81) est formé,
dans l'adaptateur (83), un trou traversant (83a) s'étendant dans une direction axiale d'un axe central de l'obturateur (80) est formé,
dans l'obturateur (80), un câble de puissance (20) passant à travers l'isolateur d'obturateur solide (81) est inséré, et
un fil central (21) du câble de puissance (20) est inséré dans le trou d'obturateur (82b),
le réservoir (50) comporte une bride (51) sur une partie d'extrémité,
le bouchon (70) est fixé à la bride (51) à l'aide d'un premier boulon (91) et d'un écrou (92), et
l'obturateur (80) est fixé au bouchon (70) à l'aide d'un second boulon (93) vissé depuis l'extérieur du réservoir (50) par l'intermédiaire du trou traversant (83a) à un trou de vis non traversant, ayant un métal incorporé (70d), formé sur la surface extérieure.

2. Appareillage de commutation à isolation au gaz (100) selon la revendication 1, dans lequel
un évidement (70b) est formé sur la surface extérieure du bouchon (70), et
l'obturateur (80) est inséré dans l'évidement (70b).

3. Appareillage de commutation à isolation au gaz (100) selon la revendication 1, dans lequel
un espace entre l'isolateur de bouchon solide (72) et l'isolateur d'obturateur solide (81) est scellé avec un caoutchouc de silicone (99).

4. Appareillage de commutation à isolation au gaz (100) selon la revendication 1, dans lequel,
dans le bouchon (70), un trou de bouchon (70c) est formé sur une surface extérieure (70a) en contact avec l'obturateur (80), et
une saillie (82a) fixée au trou de bouchon (70c) est formée sur une surface intérieure du conducteur d'obturateur (82).

5. Appareillage de commutation à isolation au gaz (100) selon la revendication 1, dans lequel
le trou d'obturateur (82b) est pourvu d'un contact (82c) faisant saillie dans une direction d'axe central de l'isolateur d'obturateur solide (81), et
le contact (82c) est mis en contact avec le fil central (21).
